# EUROPEAN PATENT APPLICATION

(11) **EP 4 836 066 A1**
(43) Date of publication of application: **04.11.2026**
(21) Application number: 24912840.6
(22) Date of filing: 24.12.2024
(51) Int. Cl.: H01M 10/0587, H01M 4/13, H01M 50/538, H01M 50/586, H01M 50/595

(54) **CYLINDRICAL LITHIUM-ION SECONDARY BATTERY**

(30) Priority: 27.12.2023 JP 2023221669
(71) Applicant: Panasonic Intellectual Property Management Co., Ltd., Kadoma-shi, Osaka 571-0057 (JP)
(72) Inventor: YOSHINARI, Rina, kadoma-shi, Osaka 571-0057 (JP); ISHIGURO, Tasuku, kadoma-shi, Osaka 571-0057 (JP); YAMAMOTO, Norihisa, kadoma-shi, Osaka 571-0057 (JP)
(74) Representative: Novagraaf International SA
(86) International application number: PCT/JP2024/045752
(87) International publication number: WO 2025/142954

(57) **Abstract**

The present invention provides a cylindrical lithium-ion secondary battery having a positive electrode plate that constitutes an electrode body. The positive electrode plate has a positive electrode mixture layer formed on the surface of a positive electrode core, a positive electrode tab bonded to an exposed surface formed on only one side, in the electrode plate transverse direction, of at least a part of the positive electrode plate in the electrode plate longitudinal direction, and an insulating tape applied to the positive electrode plate to cover the exposed surface. The positive electrode mixture layer includes a raised part with a maximum thickness that is 10% or more greater than the average thickness of the positive electrode core in the vicinity of a first exposed end of the exposed surface in the electrode plate longitudinal direction. The insulating tape covers the exposed surface and a portion of the raised part beyond a maximum thickness position M in the electrode plate longitudinal direction, the portion beyond the maximum thickness position going farther beyond the position where the thickness is less than 1.05 times the average thickness of the positive electrode mixture layer.

## Description

### TECHNICAL FIELD

The present disclosure relates to a cylindrical lithium-ion secondary battery.

### BACKGROUND ART

Conventionally, there has been known a cylindrical lithium-ion secondary battery comprising an electrode assembly having a positive electrode plate and a negative electrode plate wound with a separator interposed therebetween and a housing can that houses the electrode assembly and a non-aqueous electrolyte. In recent years, there has been a demand for high input/output of secondary batteries used in electric vehicles or the like. To meet the demand, it is considered to improve battery characteristics of the lithium-ion secondary batteries by joining a plurality of current collector leads (current collector tabs) to a plurality of core exposed surfaces where a mixture of the positive electrode plate is removed, as in the configuration described in Patent Literature 1. In this case, since the core exposed surfaces are formed only on one side of the positive electrode plate in a width direction of the electrode plate, the proportion of the mixture in the positive electrode plate is large.

### CITATION LIST

### PATENT LITERATURE

PATENT LITERATURE 1: Japanese Unexamined Patent Application Publication No. 2000-243376

### SUMMARY

However, when the exposed surfaces of the core are formed only on one side of the positive electrode plate in the width direction of the electrode plate, the application of the mixture becomes unstable in the vicinity of the end of the exposed surface of the positive electrode plate in a longitudinal direction of the electrode plate, which may be likely to cause bulging of the mixture. This causes occurrence of dendritic Li deposition in the vicinity of a position on the negative electrode plate that faces the bulging. The Li deposition causes short circuit or deterioration of the secondary batteries.

It is an advantage of the present disclosure to suppress Li deposition in a cylindrical lithium-ion secondary battery in a configuration where the core exposed surfaces are formed only on one side of a positive electrode plate in a width direction of the electrode plate.

A cylindrical lithium-ion secondary battery according to the present disclosure comprises: an electrode assembly having a positive electrode plate and a negative electrode plate wound with a separator therebetween; and a housing can that houses the electrode assembly, wherein the positive electrode plate includes a positive electrode core, a positive electrode mixture layer formed on a surface of the positive electrode core, a positive electrode tab formed in at least some region in a longitudinal direction of the electrode plate only on one side in a width direction of the electrode plate, joined to at least one exposed surface where the positive electrode core is exposed, and extending from one end of the positive electrode core in the width direction of the electrode plate, and an insulating tape attached to the positive electrode plate so as to cover both the exposed surface and the positive electrode tab, which overlaps the exposed surface, the positive electrode mixture layer has a bulging portion in a vicinity of a first exposed end of the at least one exposed surface in the longitudinal direction of the electrode plate on the positive electrode core, the bulging portion has a maximum thickness that is greater than or equal to 10% larger than an average thickness of a region of the positive electrode mixture layer excluding the bulging portion, and the insulating tape covers so as to extend over the at least one exposed surface and a maximum thickness position of the bulging portion in the longitudinal direction of the electrode plate, and further extend over a position that is beyond the maximum thickness position and that has a thickness less than 1.05 times the average thickness of the positive electrode mixture layer.

According to the cylindrical lithium-ion secondary battery according to the present disclosure, it is possible to cover substantially the entire bulging portion on the positive electrode mixture layer, which may cause Li deposition, in the configuration where the core exposed surface is formed only on one side of the positive electrode plate in the width direction of the electrode plate. This can suppress Li deposition.

### BRIEF DESCRIPTION OF DRAWING

FIG. 1 is an axial sectional view of a cylindrical lithium-ion secondary battery according to an example of an embodiment.
FIG. 2 is an exploded perspective view of some region of an electrode assembly constituting the cylindrical lithium-ion secondary battery according to the example of the embodiment.
FIG. 3 is a schematic exploded view of a positive electrode plate in the example of the embodiment.
FIG. 4 is an enlarged view along the A-A cross section in FIG. 2.
FIG. 5 is an enlarged view corresponding to one side in a thickness direction of the electrode plate in FIG. 4 in a positive electrode plate constituting a cylindrical lithium-ion secondary battery in another example of the embodiment.
FIG. 6 is a diagram showing measurement results regarding the relationship between the distance from the end of a core exposed surface on the positive electrode plate to the outside and the thickness of a positive electrode mixture layer.
FIG. 7 is a schematic view showing a portion B of FIG. 3 enlarged and positive electrode tabs omitted.
FIG. 8 is a diagram showing the result of determining the relationship between the thickness of the positive electrode mixture layer at the end of an insulating tape and the state of Li deposition in a plurality of test products of the positive electrode plate.
FIG. 9 is a view corresponding to FIG. 3 in a cylindrical lithium-ion secondary battery in another example of the embodiment.
FIG. 10 is a diagram showing experimental results of determining the relationship between lengths X1a and X2 and the state of occurrence of Li deposition, the length X1a being from a reference position X0 to the surface position of a thickness region that is 1.05 times an average thickness of the positive electrode mixture layer, the length X2 being from a reference position X0 to a first tape end of the insulating tape.

### DESCRIPTION OF EMBODIMENTS

The inventors of the present invention found that when a core exposed surface in a cylindrical lithium-ion secondary battery is formed only on one side of the positive electrode plate in a width direction of the electrode plate, a bulging portion is easily formed in the vicinity of an exposed surface of the positive electrode plate at the end in a longitudinal direction of the electrode plate. As a result, it was also found that Li deposition is likely to occur in the vicinity of the bulging portion.

As a result of extensive studies, the inventors found that in a configuration where the exposed surface of the core is formed only on one side of the positive electrode plate in the width direction of the electrode plate, the deposition can be suppressed by regulating a attaching position of an insulating tape that is attached to the positive electrode plate so as to cover a positive electrode tab overlapping the exposed surface and the exposed surface. Specifically, the deposition can be suppressed by the configuration in which when the bulging portion has a maximum thickness that is greater than or equal to 10% larger than an average thickness of a region of the positive electrode mixture layer excluding the bulging portion, the insulating tape covers so as to extend over the exposed surface and a maximum thickness position of the bulging portion in the longitudinal direction of the electrode plate, and further extend over a position that is beyond the maximum thickness position and that has a thickness less than 1.05 times the average thickness of the positive electrode mixture layer.

Hereinafter, an embodiment of the present invention will be described in detail with reference to the accompanying drawings. In the following description, specific shapes, materials, numerical values, directions, or the like are examples for easy understanding of the present disclosure, and they can appropriately be changed in accordance with the specifications of the cylindrical lithium-ion secondary battery. A term "substantially" as used below includes the meaning of completely the same and also substantially the same. Moreover, when a plurality of embodiments or modifications are included in the following description, it is assumed from the beginning that their characteristic portions are combined and used as appropriate.

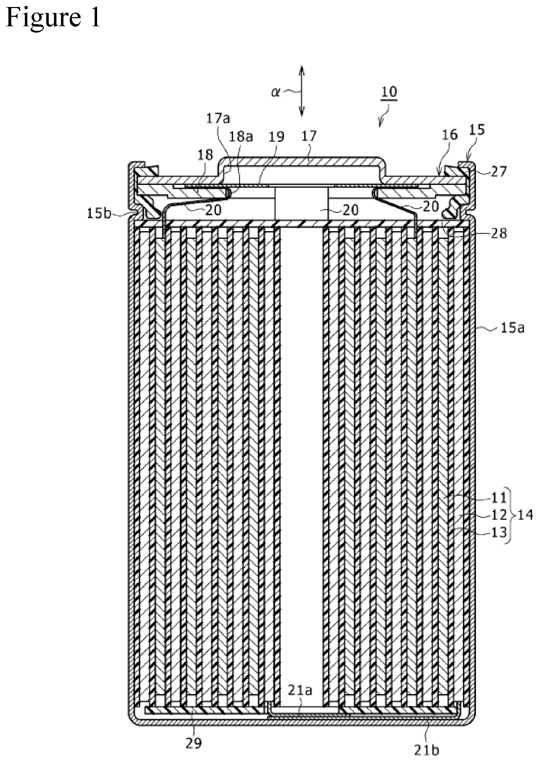

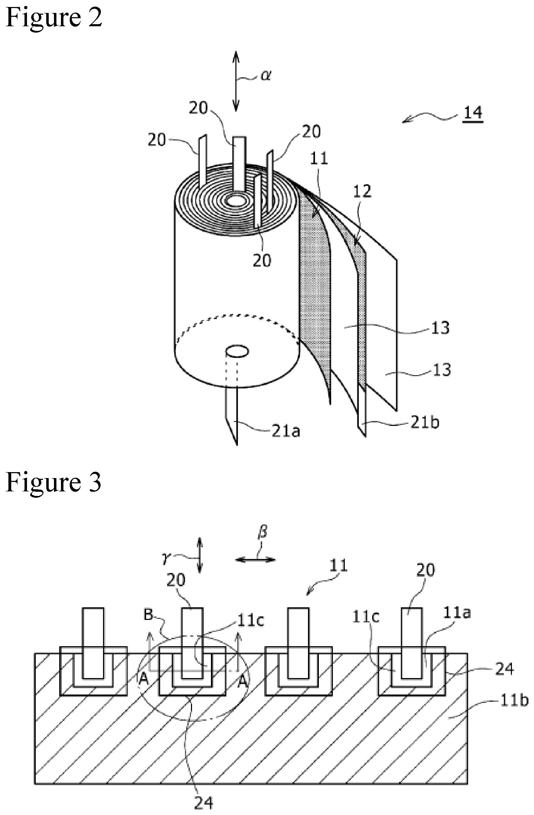

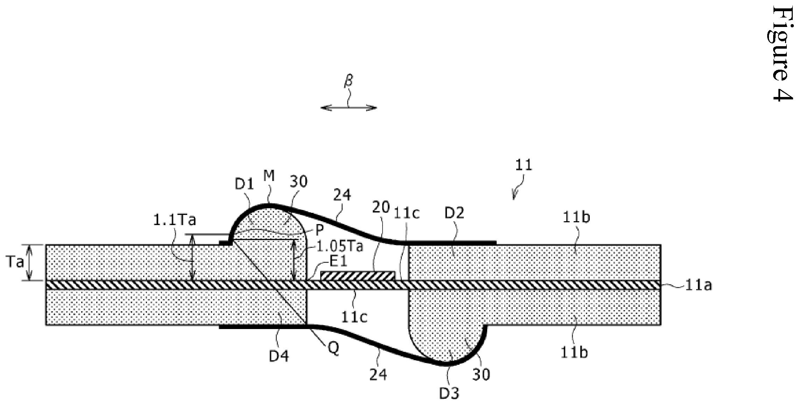

FIG. 1 is an axial sectional view of a cylindrical lithium-ion secondary battery 10 according to an embodiment. FIG. 2 is an exploded perspective view of some region of an electrode assembly 14 constituting the cylindrical lithium-ion secondary battery 10. FIG. 3 is a schematic exploded view of a positive electrode plate 11. FIG. 4 is an A-A sectional view of FIG. 2.

As shown in FIGS. 1 to 4, the cylindrical lithium-ion secondary battery 10 comprises a wound electrode assembly 14, a non-aqueous electrolyte (not shown), a housing can 15, and a sealing assembly 16. The wound electrode assembly 14 includes a positive electrode plate 11, a negative electrode plate 12, and separators 13. As shown in FIG. 2 to be described later, the positive electrode plate 11 and the negative electrode plate 12 are wound in a spiral form through the separators 13. In the following description, one axial direction of the electrode assembly 14 may be referred to as "upper" and the other axial direction may be referred to as "lower". The non-aqueous electrolyte contains non-aqueous solvent and electrolyte salt dissolved in the non-aqueous solvent. Hereinafter, the cylindrical lithium-ion secondary battery 10 is stated as a secondary battery 10.

As shown in FIG. 2, the positive electrode plate 11 is joined and electrically connected to four positive electrode tabs 20 as the plurality of current collector tabs. Each of the positive electrode tabs 20 is a conductive member that electrically connects a positive electrode core 11a (FIG. 3) to be described later, constituting the positive electrode plate 11, to a positive electrode terminal and that extends from an upper end of the positive electrode core 11a in the electrode assembly 14 to one side (upward) in an axial direction α.

The negative electrode plate 12 is joined and electrically connected to two negative electrode tabs 21a and 21b. Each of the negative electrode tabs 21a and 21b is a conductive member that electrically connects a negative electrode core, constituting the negative electrode plate 12, to a bottom portion of a housing can 15 and that extends from a lower end of the negative electrode core to the other side (downward) in the axial direction α. One negative electrode tab 21a is joined to a winding start-side end portion of the negative electrode plate 12, and the other negative electrode tab 21b is joined to a winding terminal-side end portion of the negative electrode plate 12. One of the two negative electrode tabs 21a and 21b may be omitted.

The negative electrode plate 12 is formed with a dimension that is slightly larger than the positive electrode plate 11 so as to be longer than the positive electrode plate 11 in the longitudinal direction of the electrode plate and the width direction of the electrode plate. The two separators 13 are also formed with dimensions that are at least slightly larger than the positive electrode plate 11, and are arranged to hold the positive electrode plate 11 therebetween.

With reference to FIG. 3, the positive electrode plate 11 includes a strip-shaped positive electrode core 11a and a positive electrode mixture layer 11b formed on the surface of the positive electrode core 11a. For the positive electrode core 11a, there may be used, for example, a foil of metal such as aluminum, or a film with the metal arranged on the surface thereof. The preferable positive electrode core 11a is a metal foil having aluminum or aluminum alloy as a main component. The positive electrode core 11a has a thickness of, for example, 10 µm to 30 µm. In this example, the positive electrode mixture layer 11b is formed on both sides of the positive electrode core 11a, but may be formed only on one surface of the positive electrode core 11a in a thickness direction.

The positive electrode mixture layer 11b preferably contains a positive electrode active material, a conductive agent, and a binding agent. The positive electrode plate 11 is fabricated by applying positive electrode mixture slurry containing a positive electrode active material, a conductive agent, a binding agent, and a solvent such as N-methyl-2-pyrrolidone (NMP) to both the surfaces of the positive electrode core 11a, and then drying and rolling it.

Examples of the positive electrode active material may include lithium-transition metal composite oxides containing transition metal elements, such as Co, Mn, or Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, Li2MPO₄F (M is at least one of the group consisting of Na, Mg, Sc, Y, Mn, Fe, Co, Ni, Cu, Zn, Al, Cr, Pb, Sb, and B, and 0 < x ≤ 1.2, 0 < y ≤ 0.9, and 2.0 ≤ z ≤2.3). They may be used independently or may be mixed and used together.

Examples of the conductive agent may include carbon black (CB) such as acetylene black (AB) and Ketjenblack, and carbon materials such as graphite. Examples of the binding agent may include fluororesin such as polytetrafluoroethylene (PTFE) and polyvinylidene difluoride (PVdF), polyacrylonitrile (PAN), polyimide (PI), acrylic resin, and polyolefin resin. These resins may be used in combination with carboxymethylcellulose (CMC) or its salt, polyethylene oxide (PEO), or the like. They may be used independently, or two or more of them may be used in combination.

As shown in FIG. 3, exposed surfaces 11c where the surface of metal constituting the positive electrode core 11a is exposed are formed at four positions of the positive electrode plate 11 in a longitudinal direction of the electrode plate β only in one end portion in a width direction of the electrode plate γ. In FIG. 3, the positive electrode mixture layer 11b is expressed as a shaded area. The four positive electrode tabs 20 are joined to the four exposed surfaces 11c by ultrasonic welding, for example. The positive electrode tabs 20 are coated with an insulating tape 24, as a result of which a short circuit between the positive electrode plate 11 and the negative electrode plate 12 is prevented. The insulating tape 24 covers all the exposed surfaces 11c of the positive electrode core 11a as shown in FIG. 3.

The insulating tape 24 includes, for example, a base material constituted of an insulating resin and an adhesive layer formed on one side of the base material and substantially without conductivity.

Component materials of the positive electrode tabs 20 are not particularly limited. The positive electrode tabs 20 are preferably made of a metal having aluminum as a main component. An actual number of windings of the positive electrode plate 11 and the negative electrode plate 12 are much larger than those shown in FIGS. 1 and 2.

The negative electrode plate 12 has a strip-shaped negative electrode core and a negative electrode mixture layer formed on both the surfaces of the negative electrode core. For the negative electrode core, there may be used, for example, a foil of metal such as copper, or a film with the metal arranged on its surface layer. The negative electrode core has a thickness of, for example, 5 µm to 30 µm.

The negative electrode mixture layer preferably includes a negative-electrode active material and a binding agent. The negative electrode plate 12 is fabricated by applying a negative electrode mixture slurry containing a negative electrode active material, a binding agent, water, and the like to both the surfaces of the negative electrode core, and then drying and rolling it.

The negative electrode active material is not particularly limited as long as lithium ions can be irreversibly absorbed and released, and there may be used, for example, carbon materials such as natural graphite and artificial graphite, metal that alloys with lithium such as Si and Sn, or alloys containing these metals, composite oxides, and the like. For the binding agent included in a negative electrode active material layer, the same resin as used in the positive electrode plate 11 may be used, for example. In the case of preparing the negative electrode mixture slurry with aqueous solvent, there may be used styrene-butadiene rubber (SBR), CMC or its salt, polyacrylic acid or its salt, polyvinyl alcohol, or the like. They may be used independently, or two or more of them may be used in combination.

The non-aqueous electrolyte has ion conductivity (for example, lithium ion conductivity). The non-aqueous electrolyte includes non-aqueous solvent and electrolyte salt dissolved in the non-aqueous solvent. The non-aqueous electrolyte is not limited to liquid electrolyte (non-aqueous electrolyte solution), and may be solid electrolyte using gel-like polymers or the like. The secondary battery 10 is preferably a lithium-ion battery. As the electrolyte salt, lithium salt such as LiBF₄ or LiPF₆ is used. As the non-aqueous solvent, there may be used, for example, esters such as ethylene carbonate (EC), propylene carbonate (PC), dimethyl carbonate (DMC), ethyl methyl carbonate (EMC), diethyl carbonate (DEC), methyl propionate (MP), ethers, nitriles, amides, and mixed solvents of the group consisting of greater than or equal to two of these materials. The non-aqueous solvents may contain halogen substituted product in which at least a portion of hydrogen in these solvents is substituted with halogen atoms such as fluorine.

Examples of the halogen substituted product may include fluorinated cyclic carbonate esters such as fluoroethylene carbonate (FEC), fluorinated chain carbonate esters, and fluorinated chain carboxylic acid esters such as fluoro methyl propionate (FMP). In terms of suppressing deterioration of charge and discharge cycle characteristics and improving input characteristics of the non-aqueous electrolyte secondary battery, or the like, the non-aqueous electrolyte preferably contains greater than or equal to 5 mass% FEC and more preferably contains greater than or equal to 5 mass% and less than or equal to 15 mass% FEC relative to the mass of the non-aqueous electrolyte.

For the separator 13 (FIGS. 1 to 2), a porous sheet with ion permeability and insulation properties is used. Specific examples of the porous sheet may include microporous thin films, woven fabrics, and non-woven fabrics. As the materials of the separator 13, olefin resin such as polyethylene and polypropylene is preferable. The separator 13 has a thickness of, for example, 10 µm to 50 µm. The separator 13 tends to become thinner as the capacity and output of batteries become higher. The separator 13 has a melting point of about greater than or equal to 130°C and less than or equal to 180°C, for example.

On an outermost circumferential surface of the separator 13 that is the outermost circumferential surface of the electrode assembly 14, a tape (not shown) is attached to the outermost circumferential surface of the separator 13 so as to fix a winding terminal end of the separator.

In the example shown in FIG. 1, the housing can 15 and the sealing assembly 16 constitute a metal battery case that houses the electrode assembly 14 and the non-aqueous electrolyte. The sealing assembly 16 is formed by making a sealing plate 17 that is a metal terminal cap on the upper side overlap a metal current collector plate 18 having through-holes 18a on the lower side in an up-down direction with a metal plate 19 interposed therebetween. The sealing plate 17 is in a hat-shape having a short cylindrical portion 17a at the center, the short cylindrical portion 17a having a bottomed cylindrical shape molded so as to bulge upward. The housing can 15 has an annular grooved portion 15b formed on an upper end portion of the cylindrical portion 15a by recessing the upper end portion toward the radial inside over the entire circumference. The sealing assembly 16 is fitted inside via a gasket 27 through an opening at the upper end of the cylindrical portion 15a, and the upper end portion of the cylindrical portion 15a is crimped to the radial inside while being engaged with the upper surface of the grooved portion 15b. As a result, the sealing assembly 16 is crimped and fixed to the inside of an opening end portion of the housing can 15 via the gasket 27 on the outer circumferential side.

The electrode assembly 14 has insulating plates 28 and 29 provided above and below the electrode assembly 14, respectively. The four positive electrode tabs 20 extend toward the sealing assembly 16 through the through-holes of the upper insulating plate 28, extend through the through-holes 18a of the current collector plate 18, and are interposed and joined between the current collector plate 18 and an outer circumferential portion of the metal plate 19. In the secondary battery 10, the sealing plate 17 electrically connected to the current collector plate 18 and the metal plate 19 serves as a positive electrode terminal.

Out of two the negative electrode tabs 21a and 21b, one negative electrode tab 21a, joined to a winding start-side end portion of the negative electrode plate 12, passes through a through-hole in the lower insulating plate 29 and is then bent at a substantially right angle to a center axis side of the battery so as to extend toward the opposite side with respect to the center axis. Out of two the negative electrode tabs 21a and 21b, the other negative electrode tab 21b, joined to a winding terminal-side end portion of the negative electrode plate 12, passes through the outside of the lower insulating plate 29 and is then bent so as to overlap the one negative electrode tab 21a. An overlap portion of the negative electrode tabs 21a and 21b is joined to an inner surface of the bottom portion of the housing can 15. This allows each of the negative electrode tabs 21a and 21b to be electrically connected to the housing can 15 serving as a negative electrode terminal.

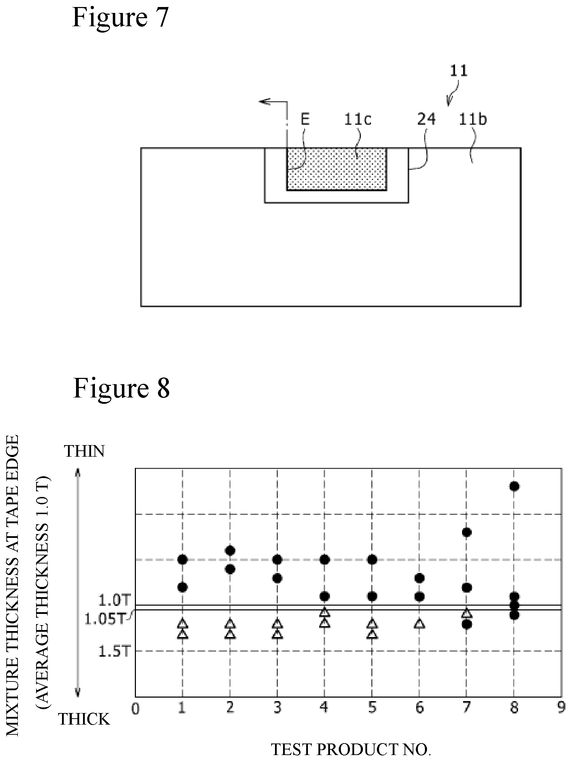

As described above, the exposed surfaces 11c where the surface of metal constituting the positive electrode core 11a is exposed are formed at a plurality of positions on the positive electrode plate 11 in the longitudinal direction β of the electrode plate, which are only on one side in the width direction of the electrode plate γ. In this configuration, it was found that a bulging portion is easily formed in the vicinity of each end of the exposed surfaces 11c of the positive electrode plate 11 in the longitudinal direction of the electrode plate. As a result, it was also found that Li deposition is likely to occur in the vicinity of the bulging portions. In the present embodiment, to prevent this inconvenience, a attaching position of the insulating tape 24 was regulated. This will be described with reference to FIGS. 4 and 8 below.

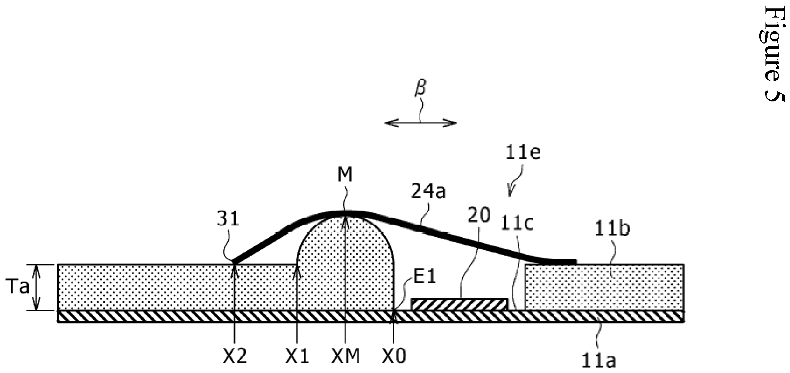

FIG. 4 is an enlarged view along the A-A cross section of FIG. 2. FIG. 5 is an enlarged view showing one side in an electrode plate thickness direction in FIG. 4. As shown in FIGS. 4 and 5, in the positive electrode plate 11, the exposed surfaces 11c where the positive electrode core 11a is exposed are formed on both the surfaces at positions opposite from each other. At this time, on both the surfaces of the positive electrode plate 11, a bulging portion 30 of the positive electrode mixture layer 11b is generated in the vicinity of an end of the exposed surface 11c on one side or the other side in the longitudinal direction of the electrode plate β.

It is known that the bulging portion 30 is easily generated due to unstable application of the positive electrode mixture layer 11b at the time of application. For example, with reference to FIG. 3, when the exposed surfaces 11c are present only in one side end portion of the positive electrode plate 11 in the width direction of the electrode plate, slurry is applied on the positive electrode core 11a from one side to the other side in the longitudinal direction of the electrode plate by an application apparatus of positive electrode mixture slurry. At this time, the application device often applies the slurry by moving the positive electrode core 11a in the longitudinal direction of the electrode plate, while discharging the slurry from a plurality of discharge ports arranged side by side in the width direction of the positive electrode plate 11. In this case, the discharge of the slurry from some of the discharge ports is stopped intermittently on the exposed surfaces 11c. However, the discharge of the slurry continues in a region adjacent to the exposed surface in the width direction of the electrode plate, and the bulging portion 30 is considered to be generated in the vicinity of the end of the exposed surface 11c on one side or the other side in the longitudinal direction of the electrode plate, as the slurry flows into a region before application stop on the exposed surface 11c.

In FIG. 4, application of the positive electrode mixture slurry is performed from left to right in FIG. 4 on one side (the upper side in FIG. 4) in the thickness direction of the positive electrode plate 11, whereas application of the positive electrode mixture slurry is performed from right to left in FIG. 4 on the other side (the lower side in FIG. 4) in the thickness direction of the positive electrode plate 11. Then, the positive electrode tab 20 is joined to the exposed surface 11c on one side of the positive electrode plate 11 in the thickness direction, and the insulating tape 24 is attached on the positive electrode plate 11 so as to cover a maximum thickness position M of the bulging portion 30. A following description focuses on the configuration of one side of the positive electrode plate 11 in the thickness direction (the upper side in FIG. 4).

In the present example, the positive electrode mixture layer 11b has the bulging portion 30 in the vicinity of a first exposed end E1 that is the end of each of the exposed surfaces 11c on one side in the longitudinal direction of the electrode plate in the positive electrode core 11a. In each of the bulging portions 30, the maximum thickness is greater than or equal to 10% larger than an average thickness Ta of a region of the positive electrode mixture layer 11b excluding all the bulging portions 30. For example, it is possible to take computed tomography (CT) images of the cross sections at regions different in the width direction of the electrode plate from the exposed surfaces 11c of the positive electrode plate 11, measure the thickness of the positive electrode mixture layer 11b at a plurality of positions in the longitudinal direction of the electrode plate from the taken CT images, and measure the average thickness Ta from the plurality of measurements.

The both ends of the insulating tape 24 are attached to the surface of the positive electrode mixture layer 11b across the exposed surface 11c in the longitudinal direction of the electrode plate. The insulating tape 24 covers so as to extend over the exposed surface 11c and the maximum thickness position M of the bulging portion 30 in the longitudinal direction of the electrode plate, and further extend over a position that is beyond the maximum thickness position M and that has a thickness less than 1.05 times the average thickness Ta of the positive electrode mixture layer 11b. "The position that has a thickness less than 1.05 times the average thickness Ta" means the surface position of a portion that has a thickness less than 1.05 times the average thickness Ta.

FIG. 4 shows the case where the thickness of the bulging portion 30 at the position of point P is 1.1 times the average thickness Ta of the positive electrode mixture layer 11b (1.1 Ta), and the thickness at the maximum thickness position M is larger than 1.1 Ta, and also shows that the position at point Q indicates the thickness position that is 1.05 times the average thickness Ta (1.05 Ta). Even in this case, by covering the bulging portions 30 with the insulating tape 24 as described above, substantially the entire bulging portions 30 of the positive electrode mixture layer 11b, which causes Li deposition, can be covered with the insulating tape 24. This can suppress Li deposition.

FIG. 5 is an enlarged view of a positive electrode plate 11e constituting a secondary battery in another example of the embodiment, corresponding to one side in the electrode plate thickness direction in FIG. 4. In the configuration of the present example, a region of the insulating tape 24a, extending beyond the exposed surface 11c, the maximum thickness position M, and the position reaching the average thickness Ta in the longitudinal direction of the electrode plate, further extends to the opposite side of the exposed surface 11c as compared with the case of FIG. 4.

Now, it is considered to measure the thickness of the positive electrode mixture layer 11b at each prescribed distance in the longitudinal direction of the electrode plate, from the maximum thickness position M of the bulging portion 30 toward a first tape end 31 of the insulating tape 24 on the side of the bulging portion 30, with the first exposed end E1 of the exposed surface 11c as a reference position X0. In this case, the prescribed distance is 10 µm, for example. Here, among the plurality of measurement positions measured sequentially toward the first tape end 31, when the thickness of the positive electrode mixture layer 11b at a previous measurement position becomes identical to the thickness of the positive electrode mixture layer 11b at a current measurement position, a length of the previous measurement position from the reference position X0 is defined as a length X1. A length from the reference position X0 to the first tape end 31 is also defined as X2. In this case, the attaching position of the first tape end 31 is regulated so that X2 > X1 × 1.1 may be established in the configuration of the present example.

In such a configuration of the present example, the surface position of the positive electrode mixture layer 11b corresponding to the length X1 can be estimated to be a boundary position between the bulging portion 30 and the region having the average thickness Ta. As a result, a range including the position 1.1 times the length X1 that is from the reference position X0 to the boundary position can be covered with the insulating tape 24 on the surface of the positive electrode mixture layer 11b. Therefore, the entire bulging portion 30 can be covered with the insulating tape 24 more reliably. In the present example, other configurations and effects are similar to those in FIGS. 1 to 4.

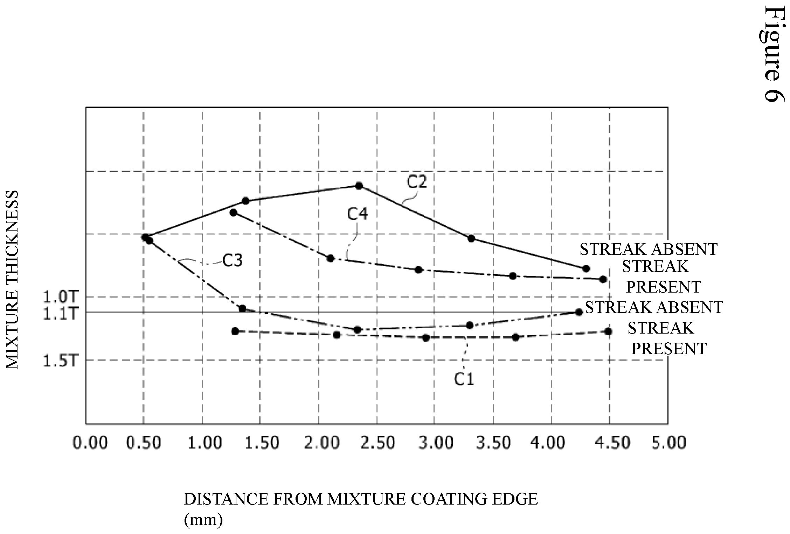

FIG. 6 is a diagram showing measurement results regarding the relationship between the distance from the end of the exposed surface 11c of the positive electrode core 11a in the positive electrode plate 11 to the outside and the thickness of the positive electrode mixture layer 11b. FIG. 7 is a schematic view showing a portion B enlarged from FIG. 3 with positive electrode tabs omitted.

With reference to FIGS. 6 and 7, the inventors of the present invention measured the relationship between the distance from the end E of the exposed surface 11c of the positive electrode core 11a in the positive electrode plate 11 to the outside (left side in FIG. 7) and the thickness of the positive electrode mixture layer 11b. In FIG. 7, the exposed surface 11c is shown as a shaded region. The insulating tape 24 covers the exposed surface 11c and in actuality, protrudes from the end of the positive electrode plate 11 in the width direction of the electrode plate, though illustration of the protruding region is omitted in FIG. 7.

The thickness of the positive electrode mixture layer 11b was measured on the positive electrode plate 11 at portions of both ends of the exposed surface 11c in the longitudinal direction of the electrode plate, which are toward the outside, and was further measured not only on one surface but also on the other surface of the positive electrode plate 11. A dashed line c1, a solid line c2, a dash-dot-dot line c3, and a dash-dot line C4 in FIG. 6 correspond to the thickness of the positive electrode mixture layer 11b at positions D1, D2, D3, and D4 of the positive electrode plate in FIG. 4, respectively. In FIG. 6, a streak caused by Li deposition observed on the negative electrode plate 12 due to the exposed surface 11c not covered with the insulating tape 24 is expressed as "streak present", and no streak observed on the negative electrode plate 12 is expressed as "streak absent". In the vertical axis in FIG. 6, 1.0 T indicates that the thickness of the positive electrode mixture layer 11b is equal to the average thickness Ta, 1.1 T indicates the thickness 1.1 times the average thickness of Ta, and 1.5 T indicates the thickness 1.5 times the average thickness Ta. From the measurement results of FIG. 6, it was confirmed that Li deposition occurs in the vicinity of the region where the thickness of the positive electrode mixture layer 11b is greater than the average thickness Ta, and the maximum thickness when the thickness further increases is greater than or equal to 1.1 times the average thickness Ta.

FIG. 8 is a diagram showing the result of determining the relationship between the thickness of the positive electrode mixture layer 11b at the end of the insulating tape 24 and the state of Li deposition in a plurality of test products of the positive electrode plate 11. In FIG. 8, the horizontal axis indicates test product No. of the positive electrode plate 11, and the vertical axis indicates the thickness of the positive electrode mixture layer 11b at the end of the insulating tape 24. Also, triangles in FIG. 8 indicate that Li deposition was observed on the negative electrode plate 12 in the secondary battery 10 including the positive electrode plate 11, and black circles indicate that Li deposition was not observed.

In the measurement results of FIG. 8, the thickness of the positive electrode mixture layer 11b at the end of the insulating tape 24 being greater than or equal to 1.05 times the average thickness Ta (the mixture thickness in the vertical axis in FIG. 8 being greater than or equal to 1.05 T) means that the region having the thickness that is greater than or equal to 1.05 times the average thickness Ta of the positive electrode mixture layer 11b is partly out of the end of the insulating tape 24 and is not covered with the insulating tape 24. On the other hand, the thickness of the positive electrode mixture layer 11b at the end of the insulating tape 24 being less than 1.05 times the average thickness Ta (the mixture thickness in the vertical axis in FIG. 8 being less than 1.05 T) means that the entire region having the thickness that is greater than or equal to 1.05 times the average thickness Ta of the positive electrode mixture layer 11b is covered with the insulating tape 24.

From the measurement results in FIG. 8, it was confirmed that when a part of the region having the thickness of 1.05 times or more of the average thickness Ta of the positive electrode mixture layer 11b is not covered with the insulating tape 24, Li deposition disadvantageously occurs, whereas when the entire region having the thickness of 1.05 times or more of the average thickness Ta of the positive electrode mixture layer 11b is covered with the insulating tape 24, Li deposition hardly occurs.

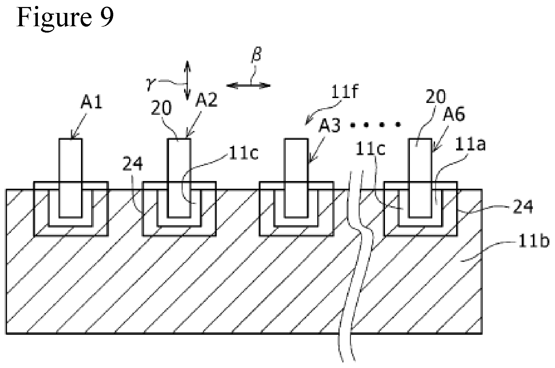

FIG. 9 is a view corresponding to FIG. 3 in a cylindrical lithium-ion secondary battery in another example of the embodiment. In the configuration of the present example, six exposed surfaces 11c are formed at six positions on the positive electrode plate 11f in the longitudinal direction of the electrode plate β, which are only at one side end portion in the width direction of the electrode plate γ. The six positive electrode tabs 20 at positions A1, A2, A3 ... A6 in FIG. 9 are joined to the six exposed surfaces 11c and are covered with the insulating tape 24 along with the corresponding exposed surfaces 11c. In the present example, other configurations and effects are similar to those of the embodiment in FIGS. 1 to 4 or 5.

The number of the exposed surfaces 11c and the positive electrode tabs 20 in the positive electrode plate is not limited to four or six described above, and may be only one, two, three, five, or greater than or equal to seven.

Corresponding to the configuration of the present disclosure, the inventors also obtained by experiments the relationship between lengths X1a and X2 and the state of occurrence of Li deposition, the length X1a being from the reference position X0 to the surface position of a thickness region that is 1.05 times an average thickness of the positive electrode mixture layer 11b, the length X2 being from the reference position X0 to the first tape end 31 of the insulating tape 24. The experiments were performed using Examples 1 to 5 and Comparative Examples 1 to 5. The configuration of Examples and Comparative Examples will be described below.

### Examples

### [Example 1]

### [Fabrication of Positive Electrode Plate]

As a positive electrode active material, lithium nickel cobalt oxide containing aluminum, represented by LiNi_{0.88}Co_{0.09}Al_{0.03}O₂, was used. Then, LiNi_{0.88}Co_{0.09}Al_{0.03}O₂ of 100 parts by mass, acetylene black of one part by pass, and polyvinylidene fluoride (PVDF) (binding agent) of 0.9 parts by mass were mixed, and an appropriate amount of N-methyl-2-pyrrolidone (NMP) was further added to prepare a positive electrode mixture slurry. Next, the positive electrode mixture slurry in a paste state was applied to both surfaces of a long positive electrode core 11a that was made of an aluminum foil with a thickness of 15 µm so that the exposed surfaces 11c for welding six positive electrode tabs 20 was formed, and was dried by a dryer. Then, the positive electrode core 11a with the positive electrode mixture slurry applied thereon and dried was cut into a prescribed electrode size and rolled using a roller to fabricate the positive electrode plate 11 having the positive electrode mixture layer 11b formed on both the surfaces of the positive electrode core 11a. The positive electrode tabs 20 made of aluminum were fixed by welding to all the exposed surfaces 11c of the core at six positions in the longitudinal direction of the positive electrode plate 11. In the Positive electrode plate 11, X1a was 3mm and X2 was 3.5mm. Therefore, X2 > X1a × 1.1 was satisfied.

### [Fabrication of Negative Electrode Plate]

As the negative electrode active material, a mixture of graphite powder of 95 parts by mass and silicon oxide of 5 parts by mass was used. Then, the negative electrode active material of 100 parts by mass was mixed with styrene-butadiene rubber (SBR) of 1 part by mass as a binder and carboxymethyl cellulose (CMC) of 1 part by mass as a thickener. The resultant mixture was then dispersed in water to prepare a negative electrode slurry. The negative electrode slurry was applied to both the surfaces of a negative electrode core made of copper foil with a thickness of 8 µm, dried by a dryer, and was rolled into a prescribed thickness by the roller of a roll press. Then, a long negative electrode core with the negative electrode mixture layer formed thereon was cut into a prescribed electrode size to fabricate the negative electrode plate 12 having the negative electrode mixture layer formed on both the surfaces of the negative electrode core. Then, at one end portion of the negative electrode plate 12 in the longitudinal direction that is also an end portion positioned on the winding terminal side of the electrode assembly 14, an exposed portion was provided where the surface of the current collector was exposed without the presence of the mixture layer, and the negative electrode tab 21b made of nickel was attached and fixed to the exposed portion by welding.

### [Fabrication of Electrode Assembly]

The fabricated positive electrode plate 11 and negative electrode plate 12 were wound in a spiral shape through the separator 13 constituted of a microporous film made of polyethylene to fabricate the wound electrode assembly 14, and its winding terminal end was fixed with a tape.

### [Preparation of Non-aqueous Electrolyte]

A vinylene carbonate (VC) of 5 parts by mass was added to a mixed solvent of 100 parts by mass, which was formed by mixing ethylene carbonate (EC) and dimethyl carbonate (DMC) so as to have a volume ratio of EC: DMC = 1:3, and was dissolved so that LiPF₆ was 1.5 mol/liter to prepare a non-aqueous electrolyte solution.

### [Fabrication of Secondary Battery]

The aforementioned electrode assembly 14 was housed in the bottomed cylindrical housing can 15, the insulating plates 28 and 29 were arranged above and below the electrode assembly 14, respectively, and the non-aqueous electrolyte solution was injected into the housing can 15 by a depressurizing method. The sealing assembly 16 was then crimped and fixed to the opening end portion of the housing can 15 via the gasket 27 to fabricate the cylindrical secondary battery 10.

### [Examples 2 to 5]

In Example 2, in the positive electrode plate, X1a was 4 mm and X2 was 4.5 mm. In Example 3, in the positive electrode plate, X1a was 5 mm and X2 was 6 mm. In Example 4, in the positive electrode plate, X1a was 6 mm and X2 was 7 mm. In Example 5, in the positive electrode plate, X1a was 5 mm and X2 was 5.6 mm. Therefore, X2 > X1a × 1.1 was satisfied in Examples 2 to 5. In Examples 2 to 5, other aspects of the configuration are similar to those in Example 1.

### [Comparative Example 1]

In Comparative Example 1, in the positive electrode plate, X1a was 4 mm and X2 was 4 mm. Therefore, in Comparative Example 1, X2 = X1a × 1.1. In Comparative Example 1, other aspects of the configuration are similar to those in example 1.

### [Comparative Examples 2 to 3]

In Comparative Example 2, in the positive electrode plate, X1a was 5 mm and X2 was 4.5 mm. In Comparative Example 3, in the positive electrode plate, X1a was 4 mm and X2 was 2 mm. Therefore, in Comparative Examples 2 and 3, X2 < X1a × 1.1. In Comparative Examples 2 and 3, other aspects of the configuration are similar to those in Example 1.

### [Comparative Examples 4 to 5]

In Comparative Example 4, in the positive electrode plate, X1a was 0 mm and X2 was 1 mm. Therefore, in Comparison Example 3, there was no bulging portion in the positive electrode plate. In Comparative Example 4, in the positive electrode plate, X1a was 0 mm and X2 was 1.5 mm. Therefore, in Comparison Example 5, there was also no bulging portion in the positive electrode plate. In Comparative Examples 4 and 5, other aspects of the configuration are similar to those in Example 1.

### [Test method]

Using the cylindrical lithium-ion secondary batteries in Examples 1 to 5 and Comparative Examples 1 to 5, charging was performed to 4.2 V with a constant current of 0.3 C under the environment of 25°C, and then charging was performed at a constant voltage of 4.2V until the current value reached 0.01 C. Then, discharging was performed up to 2.5 V with a constant current of 0.5 C. These charging and discharging is defined as one cycle. After the above charge and discharge cycle, the batteries were disassembled to check whether Li deposition occurred. For the thickness of the mixture, cross-sectional observation of the positive electrode mixture layer 11b were performed in the vicinity of the exposed surfaces 11c of the positive electrode core 11a in the electrode assembly 14 in the batteries using an X-ray CT apparatus.

### [Test Results]

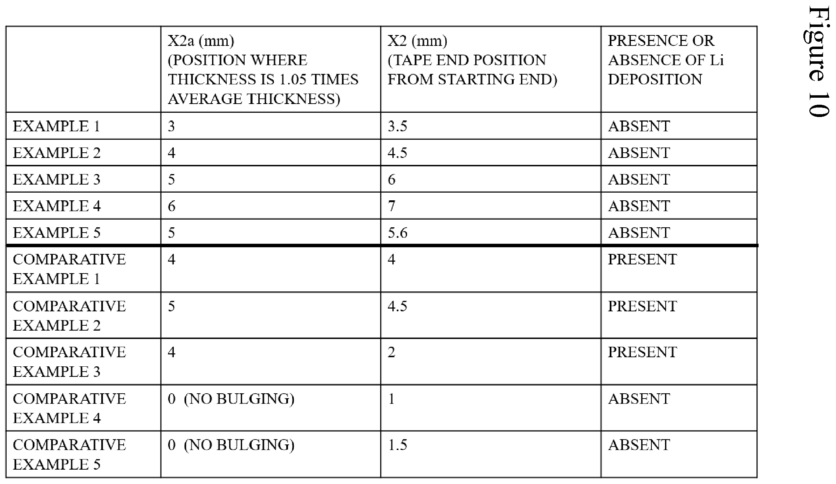

FIG.10 shows the experimental results regarding X1a and X2 in Examples 1 to 5 and Comparative Examples 1 to 5 and the presence or absence of Li deposition. From the experimental results in FIG. 10, Li deposition occurred in Comparative Examples 1 to 3 where X2 ≤ X1a × 1.1. In contrast, there was no Li deposition in Examples 1 to 5 where X2 > X1a × 1.1 was satisfied, and in Comparative Examples 4 to 5 where the bulging portion 30 was not observed. As a result, the effectiveness of the present disclosure was successfully confirmed.

### REFERENCE SIGNS LIST

10 Cylindrical lithium-ion secondary battery (secondary battery), 11 Positive electrode plate, 11a Positive electrode core, 11b Positive electrode mixture layer, 11c Exposed surface, 11e, 11f Positive electrode Plate, 12 Negative electrode plate, 13 Separator, 14 Electrode assembly, 15 Housing can, 16 Sealing assembly, 17 Sealing plate, 17a Cylinder portion, 18 Current collector, 19 Metal plate, 20 Positive electrode tab, 21a, 21b Negative electrode tab, 24, 24a Insulating tape, 27 Gasket, 28, 29 Insulating plate, 30 Bulging portion, 31 First tape end.

## Claims

1. A cylindrical lithium-ion secondary battery, comprising:
an electrode assembly having a positive electrode plate and a negative electrode plate wound with a separator interposed therebetween; and
a housing can that houses the electrode assembly, wherein
the positive electrode plate includes
a positive electrode core,
a positive electrode mixture layer formed on a surface of the positive electrode core,
a positive electrode tab formed in at least some region in a longitudinal direction of the electrode plate only on one side in a width direction of the electrode plate, joined to an exposed surface where the positive electrode core is exposed, and extending from one end of the positive electrode core in the width direction of the electrode plate, and
an insulating tape attached to the positive electrode plate so as to cover both the exposed surface and the positive electrode tab, which overlaps the exposed surface,
the positive electrode mixture layer has a bulging portion in a vicinity of a first exposed end of the at least one exposed surface in the longitudinal direction of the electrode plate on the positive electrode core,
the bulging portion has a maximum thickness that is greater than or equal to 10% larger than an average thickness of a region of the positive electrode mixture layer excluding the bulging portion, and
the insulating tape covers so as to extend over the exposed surface and a maximum thickness position of the bulging portion in the longitudinal direction of the electrode plate, and further extend over a position that is beyond the maximum thickness position and that has a thickness less than 1.05 times the average thickness of the positive electrode mixture layer.

2. The cylindrical lithium-ion secondary battery according to Claim 1, wherein
when the thickness of the positive electrode mixture layer is measured at each prescribed distance in the longitudinal direction of the electrode plate, from the maximum thickness position toward a first tape end of the insulating tape on a side of the bulging portion, with the first exposed end of the exposed surface as the reference position, an attaching position of the first tape end is regulated so that X2 > X1 × 1.1 is established, where X1 is a length of a previous measurement position from the reference position when the thickness at the previous measurement position becomes identical to the thickness at a current measurement position, and X2 is a length from the reference position to the first tape end.

3. The cylindrical lithium-ion secondary battery according to Claim 1 or 2, wherein
the exposed surface is a plurality of exposed surfaces formed at a plurality of positions of the positive electrode plate in the longitudinal direction of the electrode plate, and
the positive electrode tab is a plurality of positive electrode tabs joined to the plurality of exposed surfaces.

4. The cylindrical lithium-ion secondary battery according to Claim 3, wherein
the plurality of exposed surfaces are greater than or equal to six exposed surfaces, and
the plurality of positive electrode tabs are greater than or equal to six positive electrode tabs joined to the greater than or equal to six exposed surfaces.
